# EUROPÄISCHE PATENTSCHRIFT

(11) **EP 2 606 245 B1**
(45) Veröffentlichungstag und Bekanntmachung des Hinweises auf die Patenterteilung: **01.10.2014**
(21) Anmeldenummer: 11793337.4
(22) Anmeldetag: 07.12.2011
(51) Int. Cl.: F16C 17/03, F16C 33/10, F16C 17/02, F16C 33/04, F16C 33/08

(54) **RADIALLAGER ZUM LAGERN EINER WELLE**
RADIAL BEARING FOR MOUNTING A SHAFT
PALIER RADIAL POUR SUPPORT D'UN ARBRE

(30) Priorität: 10.12.2010 DE 102010054106
(43) Veröffentlichungstag der Anmeldung: 26.06.2013
(73) Patentinhaber: Voith Patent GmbH, 89522 Heidenheim (DE)
(72) Erfinder: HOLSTEIN, Benjamin, 89518 Heidenheim (DE); LOCHSCHMIDT, Jörg, 89075 Ulm (DE)
(74) Vertreter: Dr. Weitzel & Partner
(86) Internationale Anmeldenummer: PCT/EP2011/006114
(87) Internationale Veröffentlichungsnummer: WO 2012/095131

(56) Entgegenhaltungen:
- WO-A1-97/38899
- DE-A1- 19 525 575
- GB-A- 604 196
- US-A- 2 256 647
- US-A- 5 603 574
- US-A1- 2002 054 718
- US-A1- 2004 240 759
- US-A1- 2006 078 239

## Beschreibung

Die Erfindung betrifft ein Lager zum Lagern einer Welle in radialer Richtung. Solche Lager sind in einer großen Zahl von Varianten bekannt geworden.

Im vorliegenden Falle geht es um Lager mit einem Gehäuse, das mit Lagerschalen ausgekleidet ist. Es gibt Lagerschalen, die geschlossene Buchsen darstellen wie beispielweise aus US 2 256 647 bekannt gibt es auch Auskleidungen aus mehreren Schalen, die jeweils Segmente darstellen und die zu einem mehr oder minder geschlossenen Ring innerhalb des Gehäuses zusammengefügt sind.

Die Erfindung geht von solchen Segmentlagerschalen aus. Dabei werden die einzelnen Segmente an der Innenfläche des Gehäuses fixiert, beispielsweise durch Kleben oder Verschrauben, somit kraftschlüssig.

Dies hat zahlreiche Nachteile. Ein wesentlicher Nachteil liegt in der Art der Befestigung selbst. So sind Klebungen häufig nicht dauerhaft. Auch Verschraubungen können sich im Laufe der Zeit lösen. Außerdem lässt sich der Lagerspalt und die Segmentschalenkrümmung nicht einstellen, sodass eine optimale Schmierung nicht gewährleistet ist.

Der Erfindung liegt die Aufgabe zugrunde, ein Radiallager anzugeben, das aus Segmentschalen gebildete Gleitlagerflächen aufweist, bei dem der Lagerspalt und die Segmentschalenkrümmung einstellbar ist, und das mechanisch einfach im Aufbau ist.

Diese Aufgabe wird durch die Merkmale von Anspruch 1 gelöst.

Die erfindungsgemäße, formschlüssige Fixierung der Lagerschalen erlaubt ein gewisses Ausdehnen und/oder Verschieben wenigstens des Endbereiches der einzelnen Schalen. Diese Eigenschaft spielt bei der Enstellung der Segmente eine Rolle. Die Krümmung und die Position der Schalen rellativ zur Welle lässt sich einstellen. Zu diesem Zweck lässt sich zwischen der einzelnen Schale und dem Gehäuse ein Beilageblech oder ein vergleichbares Distanzelement ausgewählter Dicke einführen. Bevorzugt geschieht dies zwischen den beiden Enden der betreffenden Schale, in Umfangsrichtung gesehen, vorzugsweise in einem mittleren Bereich. Alternativ hierzu kann ein Schalenhalter oder ein vergleichbares Klemm- oder Halteelement, welches die Schale gegenüber dem Gehäuse fixiert von außen durch das Gehäuse sowie auch durch die betreffende Schale hindurchgeführt sein. Mit den Schalenhaltem oder vergleichbaren Klemm- oder Halteelement lassen sich in Kombination mit entsprechenden Distanzelementen die Segmentschalenkrümmung und der Lagerspalt einstellen. Von entscheidender Bedeutung ist eine gewisse Biegsamkeit der Schale. Diese Biegsamkeit erlaubt, dass die Segmentschalenkrümmung durch Klemm- oder Halteelemente zwischen Schale und Gehäuse in Kombination mit entsprechenden Distanzelementen zwischen Schale und Gehäuse bei der Montage variiert werden können. Somit werden die Lagerschalen erst bei der Montage in ihre endgültige für die Lagerfunktion massgebliche Form gebracht. Diese Vorgehensweise bietet die Möglichkeit die Genauigkleitsanforderungen an die Segmentfertigung herrabzusetzten und die Lager nach einer gewissen Betriebszeit auf einfache Weise nachträglich zu justieren.

Die Erfindung ist anhand der Zeichnung näher erläutert. Darin ist im Einzelnen folgendes dargestellt:
- Figur 1: zeigt in schematischer Darstellung einen Axialschnitt durch ein Radiallager mit einer Einstelleinrichtung zum Variieren der Krümmung einer Lagerschale.
- Figur 2: veranschaulicht den hydrodynamischen Druckaufbau bei einem zylindrischen Gleitlager.
- Figur 3: zeigt eine Welle mit einer erfindungsgemäßen Lagerung in einem achssenkrechten Schnitt.
- Figur 4: zeigt den Gegenstand von Figur 2 in perspektivischer Darstellung.
- Figur 5: zeigt einen Ausschnitt aus dem Gegenstand von Figur 2.

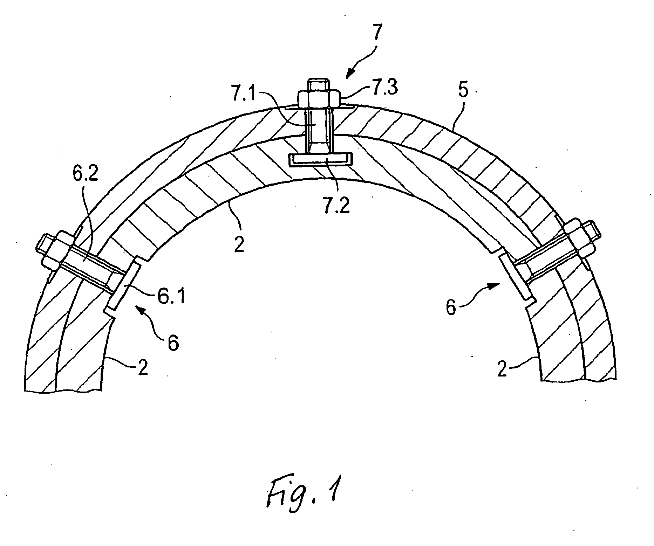

Figur 1 zeigt ein Gehäuse 5 mit einer vollständig dargestellten Schale 2, an die sich beidseits zwei weitere Schalen 2 anschließen - hier nur teilweise wiedergegeben.

Zum Einstellen der Krümmung der Schale 2 dient eine Einstelleinrichtung 7. Diese umfasst einen Stift 7.1, an dessen radial innerem Ende ein Riegel 7.2 vorgesehen ist. Riegel 7.2 ist in das Material der Schale 2 eingebettet. Stift 7.1 ragt über die radial äußere Mantelfläche des Gehäuses 5 hinaus. Dort trägt sie ein Gewinde, auf das eine Mutter 7.3 aufgeschraubt ist. Mittels der Mutter 7.3 lässt sich die radiale Position von Riegel 7.2 variieren. Damit lässt sich die Krümmung der Schale 2 einstellen. Die Einstelleinrichtung erfüllt hierbei sowohl die Funktion des Distanzelements, als auch die Funktion des Klemm- oder Haltelements.

Die Einrichtung zum Verstellen der Krümmung der Lagerschale befindet sich vorzugsweise in der Mitte zwischen den beiden Umfangsenden der betreffenden Lagerschale.

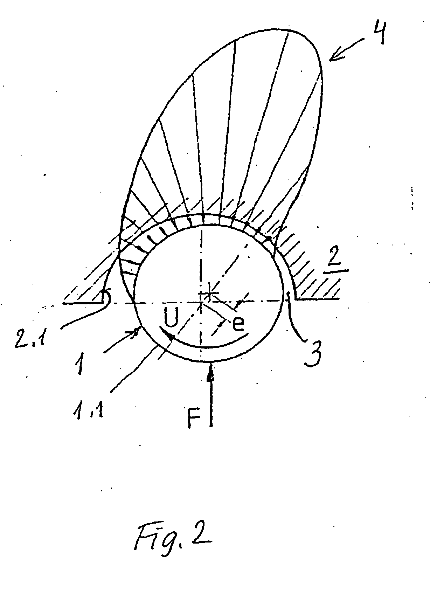

In Figur 2 ist eine umlaufende Welle 1 dargestellt. Sie ist von einem Gleitlager 2 gelagert. Zwischen diesen beiden befindet sich ein Lagerspalt 3, gebildet aus der Mantelfläche 1.1 der Welle und der Lagerfläche 2.1 des Lagers.

Der Lagerspalt 3 verjüngt sich beim Umlauf der Welle 1 in Umfangsrichtung U. Über dem Lagerspalt ist ein Druckfeld 4 aufgebaut. Dieses führt zu einer Exzentrizität e der Welle 1 gegenüber dem Lager 2.

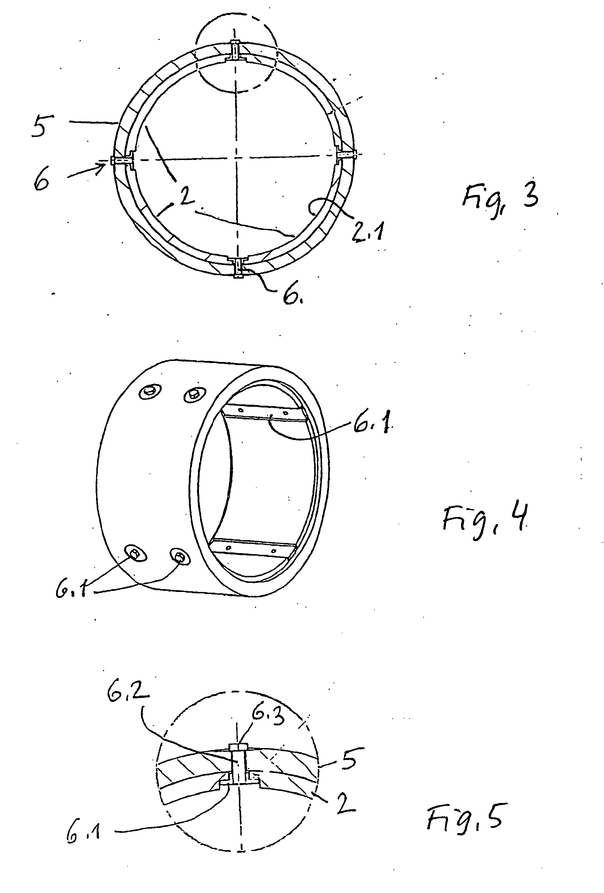

Das erfindungsgemäße Radiallager gemäß der Figuren 3 und 4 umfasst eine Anzahl von Lagerschalen 2 mit Lagerflächen 2.1. Die Lagerschalen können aus jeglichem Werkstoff bestehen, zum Beispiel Kunststoff oder Metall. Bei Kunststoffausführungen sind Polyurethan oder ein anderes Polymer als Lagerwerkstoff geeignet.

Die Lagerschalen 2 werden aus einer Vollhülse Gefertigt, welche nach dem Herstellen in die hier gezeigten Segmente unterteilt wurde.

Die Lagerschalen sind von einem Gehäuse 5 umschlossen, das beispielsweise aus Stahl besteht.

Zur Fixierung der Lagerschalen 2 am Gehäuse sind Schalenhalter 6 als Klemm- oder Halteelemente vorgesehen. Diese umfassen einen Haltestreifen 6.1, der sich über die axiale Länge der Lagerschalen erstreckt und in Aussparungen der einander benachbarten Lagerschalen eingreift. Die Tiefe der Aussparung und die Dicke des Haltestreifens 6.1 sind derart bemessen, dass die Innenfläche des Haltestreifens 6.1 mit der Lagerfläche 2.1 bündig ist.

Jeder Schalenhalter 6 umfasst weiterhin eine Mehrzahl von Haltestiften 6.2. Diese sind durch das Gehäuse 5 sowie durch die Lagerschale 2 hindurchgeführt und an Haltestreifen 6.1 fixiert. Sie ragen über die äußere Mantelfläche des Gehäuses 5 hinaus. Dort weisen sie ein Gewinde auf, mit dem eine Schraube 6.3 verschraubt ist.

Im Allgemeinen wird der Schalenhalter 6 aus Metall bestehen. Der Haltestreifen 6.1 kann aus einem Verbundmaterial bestehen, dessen radial innerer Bereich aus demselben oder einem ähnlichen Werkstoff wie die Lagerschale 2 gebildet ist.

Wie man aus der Schnittdarstellung gemäß Figur 5 erkennt, ist die Fixierung der Lagerschalen 2 am Gehäuse 5 eine formschlüssige. Sie gestattet ein gewisses Verschieben oder Bewegen der einzelnen Lagerschale 2.

Die Krümmung der einzelnen Lagerschale 2 lässt sich verändern. Hierzu kann zwischen der Lagerschale 2 und dem Gehäuse 5 ein Beilageblech oder ein Streifen aus einem anderen Material als Distanzelement eingeschoben werden - hier nicht dargestellt. In einem achssenkrechten Schnitt gesehen ist die Lagerschale 2 vorzugsweise gewissermaßen an drei Punkten gelagert: Zum einen an den beiden Enden - in ihrer Umfangsrichtung gesehen, mittels der Schalenhalter 6, zum anderen in einem mittleren Bereich durch das Beilageblech.

Aus Figur 5 erkennt man ferner, dass der Haltestreifen 6.1 gegenüber der inneren Mantelfläche von Lagerschale 2 versetzt ist. Er weist somit einen Abstand zur Mantelfläche der hier nicht dargestellten Welle auf, um einen Kontakt mit dieser zu vermeiden.

In Figur 5 sieht man wiederum ein Gehäuse 5 mit einer vollständig dargestellten Schale 2, an die sich beidseits zwei weitere Schalen 2 anschließen - hier nur teilweise wiedergegeben.

### Bezugszeichenliste

- 1: Welle
- 1.1: Mantelfläche der Welle
- 2: Lager, Lagerschale
- 2.1: Lagerfläche
- 3: Lagerspalt
- 4: Druckfeld
- 5: Gehäuse
- 6: Schalenhalter
- 6.1: Haltestreifen
- 6.2: Haltestift
- 6.3: Schraube
- 7: Einstelleinrichtung
- 7.1: Einstellstift
- 7.2: Riegel
- 7.3: Mutter

## Patentansprüche

1. Radiallager zum Lagern einer Welle (1), umfassend die folgenden Merkmale:
mehrere Lagerschalen (2), die entsprechend dem Radius der Welle (1) gekrümmt sind, und deren Innenfläche die Gleitlagerflächen (2.1) bilden;
ein die Lagerschalen (2) umschließendes Gehäuse (5);
jede Lagerschale (2) ist wenigstens im Bereich ihrer beiden Umfangsenden am Gehäuse (5) eingespannt;
Mittel (7) zum Einstellen der Krümmung der einzelnen Lagerschale;
die Mittel (7) zum Einstellen der Krümmung der Lagerschalen umfassen jeweils einen Riegel (7.2), der in das Material der Lagerschale (2) eingebettet ist, ferner einen Stift (7.1), der durch das Gehäuse (5) hindurchgeführt ist, mit seinem radial inneren Ende am Riegel (7.2) angreift, und an seinem radial äußeren Ende ein Eingriffselement (7.3) zum Verschieben von Stift (7.1) und Riegel (7.2) aufweist.

2. Radiallager nach Anspruch 1, **dadurch gekennzeichnet, dass** die Lagerschalen (2) aus Kunststoff oder Metall oder einem anderen biegsamen Material bestehen.

3. Radiallager nach Anspruch 2, **dadurch gekennzeichnet, dass** die Lagerschalen (2) erst bei der Montage in Ihre endgültige für die Lagerfunktion massgebliche Form gebracht werden.

4. Radiallager nach Anspruch 3, **dadurch gekennzeichnet, dass** die Lagerschalen mittels mindestens eines Klemm- oder Halteelementes und mindestens eines Distanzelementes montiert werden, wobei bei der Montage sowohl die Lagerluft, als auch die Segmentschalenkrümmung über Position und Wahl von Distanz- und Klemm- oder Halteelement eingestellt werden.

5. Radiallager nach einem der vorherigen Ansprüche, **gekennzeichnet durch** die folgenden Merkmale:
zwischen zwei einander benachbarten Lagerschalen (2, 2) ist ein Schalenhalter (6) vorgesehen;
jeder Schalenhalter (6) umfasst einen Haltestreifen (6.1), der sich über die axiale Länge des Radiallagers oder über einen wesentlichen Teil von dessen Länge erstreckt und in Aussparungen der Lagerschalen (2) eingelegt ist;
5.3 der Haltestreifen (6.1) ist an Haltestiften (6.2) fixiert, die **durch** den verbleibenden Teil der Dicke der Lagerschalen (2) sowie **durch** das Gehäuse (5) hindurchgeführt und an der äußeren Mantelfläche des Gehäuses (5) fixiert sind.

6. Radiallager nach Anspruch 5, **dadurch gekennzeichnet, dass** die radial inneren Flächen der Haltestreifen (6.1) radial außerhalb der inneren Mantelflächen der Lagerschalen (2) liegen.

## Claims

1. A radial bearing for mounting a shaft (1), comprising the following features:
1.1 several bearing shells (2) which are curved according to the radius of the shaft (1) and whose inner surface forms the plain bearing surfaces (2.1);
1.2 a housing (5) enclosing the bearing shells (2);
1.3 each bearing shell (2) is clamped to the housing (5) at least in the region of its two circumferential ends;
1.4 means (7) for setting the curvature of the individual bearing shell.
1.5 the means (7) for setting the curvature of the bearing shells respectively comprise a bar (7.2) which is embedded in the material of the bearing shell (2), further a pin (7.1) which is guided through the housing (5), acts with its radially inner end on the bar (7.2), and comprises at its radially outer end an engagement element (7.3) for displacing the pin (7.1) and the bar (7.2).

2. A radial bearing according to claim 1, **characterized in that** the bearing shells (2) consist of plastic or metal or any other flexible material.

3. A radial bearing according to claim 2, **characterized in that** the bearing shells (2) are brought to their final shape relevant for the bearing function only during mounting.

4. A radial bearing according to claim 3, **characterized in that** the bearing shells are mounted by means of at least one clamping or holding element and at least one spacer element, with both the bearing slackness and also the segment shell curvature being set during mounting both via the position and the selection of the spacer and the clamping or holding element.

5. A radial bearing according to one of the preceding claims, **characterized by** the following features:
5.1 a shell holder (6) is provided between two mutually adjacent bearing shells (2, 2);
5.2 each shell holder (6) comprises a holding strip (6.1) which extends over the axial length of the radial bearing or over a relevant part of its length and is inserted into recesses of the bearing shells (2);
5.3 the holding strip (6.1) is fixed to holding pins (6.2) which are guided through the remaining part of the thickness of the bearing shells (2) and through the housing and are fixed to the outer jacket surface of the housing (5).

6. A radial bearing according to claim 5, **characterized in that** the radially inner surfaces of the holding strips (6.1) lie radially outside of the inner jacket surfaces of the bearing shells (2).

## Revendications

1. Palier radial permettant de recevoir un arbre (1), comportant les caractéristiques suivantes:
plusieurs coussinets de palier (2), qui sont recourbés selon le rayon de l'arbre (1), et dont la face interne constitue les surfaces de palier de glissement (2.1) ;
un carter (5) renfermant les coussinets de palier (2) ;
chaque coussinet de palier (2) est fixé au carter (5) au moins dans la zone de ses deux extrémités périphériques ;
des moyens (7) permettant de régler la courbure de chaque coussinet de palier ;
les moyens (7) permettant de régler la courbure des coussinets de palier présentent chacun un verrou (7.2), qui est noyé dans le matériau du coussinet de palier (2), de même qu'une goupille (7.1), qui est introduite à travers le carter (5), qui engrène dans le verrou (7.2) par son extrémité interne radiale, et qui possède en son extrémité externe radiale un élément d'engagement (7.3) permettant de repousser la goupille (7.1) et le verrou (7.2).

2. Palier radial selon la revendication 1, **caractérisé en ce que** les coussinets de palier (2) se composent de matériau synthétique ou de métal ou d'un autre matériau ductile.

3. Palier radial selon la revendication 2, **caractérisé en ce que** les coussinets de palier (2) ne prennent leur forme définitive et déterminante pour le fonctionnement des paliers que lors du montage.

4. Palier radial selon la revendication 3, **caractérisé en ce que** les coussinets de palier sont montés à l'aide d'au moins un élément de serrage ou de retenue et d'au moins un élément d'écartement où l'on règle lors du montage le jeu radial de même que la courbure des coussinets segmentés, tandis que l'on sélectionne et positionne l'élément de serrage ou de retenue ou de l'élément d'écartement.

5. Palier radial selon l'une des revendications précédentes, présentant les caractéristiques suivantes:
un support de coussinet (6) est prévu entre deux coussinets de palier voisins (2, 2) ;
chaque support de coussinet (6) renferme une bande de retenue (6. 1), qui s'étend sur la longueur axiale du palier radial ou bien sur une partie substantielle de sa longueur et est noyé dans des évidements des coussinets de palier (2) ;
la bande de retenue (6.1) est fixée à des goupilles de retenue (6.2), qui sont introduites à travers la partie résiduelle de l'épaisseur des coussinets de palier (2) de même qu'à travers le carter puis fixées à la surface d'enveloppe externe du carter (5).

6. Palier radial selon la revendication 5, **caractérisé en ce que** les faces radiales internes des bandes de retenue (6.1) sont situées radialement à l'extérieur des surfaces d'enveloppe internes des coussinets de palier (2).
